(19) Europäisches Patentamt
European Patent Office
Office européen des brevets

(11) **EP 2 187 536 A1**

(12) **EUROPEAN PATENT APPLICATION**
published in accordance with Art. 153(4) EPC

(43) Date of publication:
**19.05.2010  Bulletin 2010/20**

(51) Int Cl.:
***H04B 7/08*** *(2006.01)*

(21) Application number: **08828402.1**

(22) Date of filing: **28.08.2008**

(86) International application number:
**PCT/JP2008/065397**

(87) International publication number:
**WO 2009/028603 (05.03.2009 Gazette 2009/10)**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(30) Priority: **29.08.2007  JP 2007223182**

(71) Applicant: **Kyocera Corporation
Kyoto-shi
Kyoto 612-8501 (JP)**

(72) Inventor: **KUSANO, Yoshimasa
Yokohama-shi
Kanagawa 224-8502 (JP)**

(74) Representative: **Schwabe - Sandmair - Marx
Patentanwälte
Stuntzstraße 16
81677 München (DE)**

(54) **RADIO COMMUNICATION DEVICE AND RADIO RECEPTION METHOD**

(57)    A wireless communication apparatus having a plurality of antennas 11-1 to 11-M, and for diversity-combining signals received by the antennas 11-1 to 11-M and performing communication with switching a modulation scheme according to a radio condition, includes a first combining unit (23, 24) for combining received power of the antennas 11-1 to 11-M based on a first algorithm; a second combining unit (21-1 to 21-M, 22, 23) for combining received power of the antennas 11-1 to 11-M based on a second algorithm different from the first algorithm; and a control unit 15 for selecting either one of the first combining unit (23, 24) and the second combining unit (21-1 to 21-M, 22, 23) depending on the modulation scheme and controlling a selected combining unit to combine received power of the antennas 11-1 to 11-M. Thus, it is possible, in performing wireless communication with adaptive modulation scheme, to reduce the influence of multipath fading caused by arrival waves with delays and maintain a constantly stable reception condition at a different modulation scheme even when the number of reception antennas is small.

FIG. 1

**Description**

CROSS PREFERENCE TO RELATED APPLICATION

This application claims priority to and the benefit of Japanese Patent Application No. 2007-223182 filed on August 29, 2007, the entire content of which is incorporated herein by reference.

TECHNICAL FIELD

This invention relates to a wireless communication apparatus and a wireless reception method capable of diversity-combining reception signals and performing communication with switching a modulation scheme according to a radio condition using a plurality of antennas.

BACKGROUND ART

There is known, as a mobile wireless communication system, a system adopting an adaptive modulation scheme increasing a reception gain using a plurality of antennas to improve the reception performance at a base station or a mobile terminal and switching a modulation scheme according to radio condition to efficiently improve the communication speed. The system employs, among a plurality of modulation schemes including a multilevel modulation scheme and an coded modulation scheme, a multilevel modulation scheme such as QAM (Quadrature Amplitude Modulation) when the radio condition is good and employs a phase shift modulation scheme such as QPSK (Quadrature Phase Shift Keying) when the radio condition is poor.

Here, the fading is mentioned as a cause of deteriorating the reception performance. The fading is a phenomenon in which radio signals transmitted from a base station or a mobile terminal arrive through lots of paths due to reflection, refraction and scattering by buildings, vehicles, trees and the like existent between both stations and are rendered to be multipath signals. When such multipath fading occurs, the received power fluctuates at a reception antenna end. Thus, a plurality of antennas is prepared at the reception side to increase the received power, and thereby the influence by multipath fading is reduced.

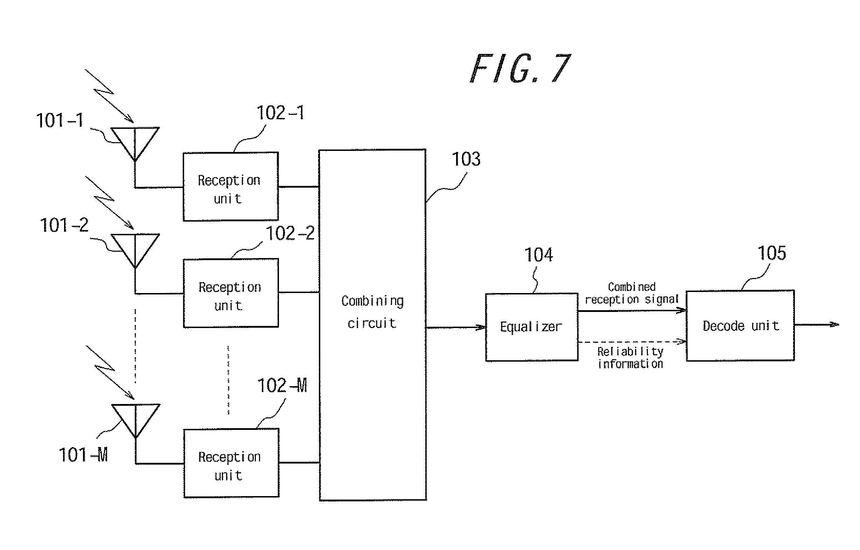

FIG. 7 is a functional block diagram illustrating a schematic configuration of a main part of a conventional wireless communication apparatus reducing the influence by such multipath fading to increase a reception gain. The wireless communication apparatus is provided with a plurality of antennas 101-1 to 101-M. Arrival signals received by the antennas 101-1 to 101-M are reception-processed and A/D-converted by the corresponding reception units 102-1 to 102-M. Output signals from these reception units 102-1 to 102-M are diversity-combined by a combining circuit 103 so that combined received power is maximum, thereafter the combined reception signal is equalized by an equalizer 104, and then error-corrected and decoded by a decode circuit 105.

Here, there is known, as an example of methods for combining a plurality of reception signals at the combining circuit 103, a method in which a known information signal inserted in a reception signal are used to calculate, for each antenna, an antenna weight at which the phase error of the received known information signal is a minimum using MMSE (Minimum Mean Square Error), and based on the calculated antenna weights, phases of reception signals from reception units are corrected and the reception signals are combined to obtain a combined reception signal having a sufficiently high SNR (Signal to Noise Ratio) (see Patent Document 1, for example).

In the conventional wireless communication apparatus shown in FIG. 7, the combining circuit 103 performs, prior to combining reception signals from reception unit, first equalization for correcting the phase of each reception signal, and then the equalizer 104 performs second equalization on a combined reception signal based on the amplitude of a known information signal. Moreover, the decode circuit 105 performs, using reliability information (combined power) generated in the second equalization of the combined reception signal by the equalizer 104, error correction on the combined reception signal and decodes it, and then outputs the result. The error correction method using such reliability information is disclosed in Patent Document 2, for example.

Moreover, there is known, as another method for combining signals received by a plurality of antennas, the MRC (maximum ratio combining), for example, in which phases of signals received by antennas are corrected using a known information signal inserted in the reception signals, and the reception signals are weighted and combined according to levels of the respective phase-corrected reception signals so that the combined received power becomes large.

Patent Document 1: JP 2003-501971 T
Patent Document 2: WO 2004/082182

## SUMMARY OF INVENTION

## TECHNICAL PROBLEM

The method of combining reception signals by MMSE described in the above Patent Document 1, when arrival waves with delays due to multipath are mixed and interference waves having time differences relative to a main signal are superposed, suppresses the interference waves to secure the SNR. Therefore, when lots of arrival waves with delays are mixed beyond MMSE's capability of removing interference waves, the SNR cannot be secured and thus the dispersion of reception symbols increases. As a result, when the error correction is performed on the combined reception signal, the possibility that correction error occurs is significantly high. The influence of multipath fading caused by such arrival waves with delays is particularly significant when the number of reception antennas is small.

Thus, with respect to the reception apparatus in which it is difficult to provide lots of antennas because of its structure, particularly in the case of a multilevel modulation scheme such as QAM applied when the radio condition is good, the correction cannot be performed properly due to the influence by the increase of reception symbol dispersion, leading to the situation in which communication is not established.

In the method of combining reception signals by MRC, on the other hand, each signal is weighted according to the level of each of the phase-corrected reception signals so that the combined received power becomes large. Thus, particularly in the case of a phase shift modulation scheme such as QPSK applied when the radio condition is poor, noises increase and the sufficient SNR cannot be secured.

Therefore, in the view of the above problem, an object of the present invention is to provide a wireless communication apparatus and a wireless reception method capable of reducing, in performing wireless communication by employing the adaptive modulation scheme, the influence of multipath fading caused by arrival waves with delays, so that a constantly stable reception condition is maintained at a different modulation scheme even when the number of reception antennas is small.

## SOLUTION TO PROBLEM

In order to achieve the above object, according to a first aspect of the invention, a wireless communication apparatus having a plurality of antennas, and for diversity-combining signals received by the plurality of antennas and performing communication with switching a modulation scheme according to a radio condition, includes:

a first combining unit for combining received power of the plurality of antennas based on a first algorithm;
a second combining unit for combining received power of the plurality of antennas based on a second algorithm, which is different from the first algorithm; and
a control unit for selecting either one of the first combining unit and the second combining unit depending on the modulation scheme and controlling a selected combining unit to combine received power of the plurality of antennas.

According to a second aspect of the invention, in the wireless communication apparatus according to the first aspect,

the first combining unit employs a phase shift modulation scheme, and
the second combining unit employs a quadrature amplitude modulation scheme, wherein
the phase shift modulation scheme weights and combines signals received by the plurality of antennas using a minimum mean square error method and
the quadrature amplitude modulation scheme calculates combining weight ratios based on received power of the plurality of antennas, and based on the calculated combining weight ratios, weights and combines the signals received by the plurality of antennas.

According to a third aspect of the invention, in the wireless communication apparatus according to the second aspect,
the combining weight ratio is calculated as an antenna reliability ratio for each antenna based on an antenna combined amplitude of received power of the plurality of antennas and amplitude of received power of each antenna, and signals received by respective antennas are weighted based on corresponding antenna reliability ratios respectively, and combined.

According to a fourth aspect of the invention, in the wireless communication apparatus according to the first aspect,
signals received by the plurality of antennas to be combined by he first combining unit and the second combining unit are orthogonal frequency-division multiplexed reception signals.

According to a fifth aspect of the invention, in the wireless communication apparatus according to the second aspect,

signals received by the plurality of antennas to be combined by the first combining unit and the second combining unit are orthogonal frequency-division multiplexed reception signals.

According to a sixth aspect of the invention, in a wireless communication apparatus according to the third aspect, signals received by the plurality of antennas to be combined by the first combining unit and the second combining unit are orthogonal frequency-division multiplexed reception signals.

Furthermore, in order to achieve the above object, according to a seventh aspect of the invention, a wireless reception method for diversity-combining signals received by a plurality of antenna, includes:

combining received power of the plurality of antennas based on a first algorithm or a second algorithm depending on a modulation scheme, wherein the second algorithm is different from the first algorithm.

ADVANTAGEOUS EFFECTS ON INTENTION

According to the present invention, received power of a plurality of antennas is combined based on a different algorithm depending on a modulation scheme of the adaptive modulation system, which enables combining them by the algorithm suitable for the modulation scheme. Therefore, it is possible to reduce the influence of multipath fading caused by arrival waves with delays and thus maintain a constantly stable reception condition at a different modulation scheme even when the number of reception antennas is small.

BRIEF DESCRIPTION OF DRAWINGS

FIG. 1 is a functional block diagram illustrating a schematic configuration of a main part of a wireless communication apparatus according to an embodiment of the present invention;

FIG. 2 is a schematic flowchart illustrating reception operation by the wireless communication apparatus shown in FIG. 1;

FIG. 3 is a functional block diagram illustrating a configuration of the combining unit shown in FIG. 1 when a modulation scheme is QAM;

FIG. 4 is a diagram exemplifying a pilot arrangement in the OFDM scheme to explain an exemplary operation of the wireless communication apparatus shown in FIG. 1;

FIG. 5 is a functional block diagram illustrating a configuration of the combining unit shown in FIG. 1 when a modulation scheme is QPSK;

FIG. 6 is a diagram illustrating by comparison a simulation result of FER characteristic of a combined reception signal generated by the wireless communication apparatus shown in FIG. 1 using different combining methods; and

FIG. 7 is a functional block diagram illustrating a schematic configuration of a main part of a conventional wireless communication apparatus.

REFERENCE SYMBOLS

| 11-1 to 11-M | antenna |
| 12-1 to 12-M | reception unit |
| 13 | combining unit |
| 14 | decode unit |
| 15 | control unit |
| 21-1 to 21-M | equalizer |
| 22 | combining weight generation circuit |
| 23 | combining circuit |
| 24 | equalizer |
| 26-1 to 26-M | switch |
| 27-1 to 27-M | switch |
| 28 | ON/OFF switch |
| 29 | switch |
| 30 | switch |

31                   ON/OFF switch

DESCRIPTION OF EMBODIMENTS

Embodiments of the present invention will be described with reference to the accompanying drawings.

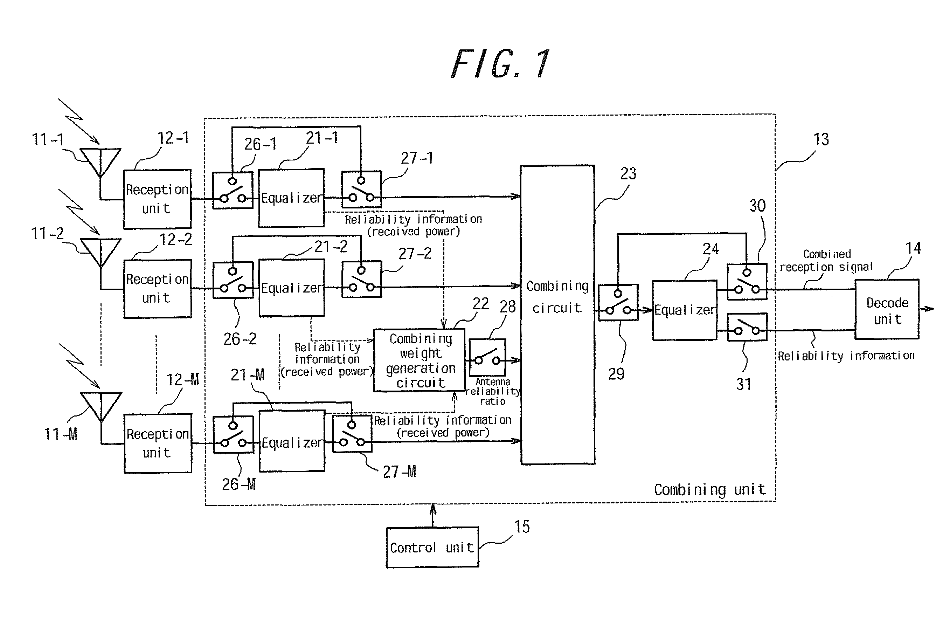

FIG. 1 is a functional block diagram illustrating a schematic configuration of a main part of a wireless communication apparatus according to an embodiment of the present invention. This wireless communication apparatus is provided with a plurality of antennas 11-1 to 11-M, reception units 12-1 to 12-M for processing signals received by the antennas 11-1 to 11-M, a combining unit 13 for diversity-combining outputs from the reception units 12-1 to 12-M, a decode unit 14 for decoding the combined reception signal and a control unit 15 for controlling combining processing by the combining unit 13.

The wireless communication apparatus according to the present embodiment employs the adaptive modulation scheme in which communication is performed with switching a modulation scheme according to a radio condition, and the control unit 15 controls the combining unit 13 to combine the outputs from the reception units 12-1 to 12-M according to a different algorithm depending on a modulation scheme. Specifically, when a phase shift modulation scheme such as QPSK is used, the combining is performed according to, as a first algorithm, the known MMSE described in FIG. 7 and, when a multilevel modulation scheme such as QAM is used, the combining is performed according to a second algorithm other than MMSE.

Here, as the second algorithm, the above known MRC can be employed. In the wireless communication apparatus according to the present embodiment, however, the antenna reliability ratio for each antenna is calculated based on the antenna combined amplitude depending on the received power of the reception units 12-1 to 12-M corresponding to the antennas 11-1 to 11-M, respectively, and the amplitude of the received power of the reception unit corresponding to each antenna. Then, the reception signals of the reception units corresponding to antennas, respectively, are weighted based on the corresponding antenna reliability ratios and combined to generate a combined reception signal.

Thus, the combining unit 13 is provided with equalizers 21-1 to 21-M corresponding to the reception units 12-1 to 12-M, respectively, a combining weight generation circuit 22, a combining circuit 23 and an equalizer 24. The combining unit 13 is further provided with input-side switches 26-1 to 26-M and output-side switches 27-1 to 27-M for bypassing the equalizers 21-1 to 21-M, an ON/OFF switch 28 connecting/disconnecting the antenna reliability ratio output line of the combining weight generation circuit 22 to the combining circuit 23, an input-side switch 29 and an output-side switch 30 for bypassing the equalizer 24 and an ON/OFF switch 31 connecting/disconnecting the reliability information output line of the equalizer 24 to the decode unit 14.

Moreover, when the currently-applied modulation scheme is QAM, the control unit 15 controls the switches 2b-1 to 26-M and the switches 27-1 to 27-M so that the outputs from the reception units 12-1 to 12-M are provided to the combining circuit 23 via the corresponding equalizers 21-1 to 21-M, and also controls the switch 29 and the switch 30 so that the output from the combining circuit 23 is provided to the decode unit 14 with bypassing the equalizer 24. Furthermore, the control unit 15 turns on the ON/OFF switch 28 so that the antenna reliability ratio is provided from the combining weight generation circuit 22 to the combining circuit 23, and turns off the ON/OFF switch 31 to block the reliability information output line from the equalizer 24 to the decode unit 14. Thus, the combining circuit 23 generates a combined reception signal based on the antenna reliability ratio.

When the modulation scheme is QPSK, on the other hand, the control unit 15 controls the switches 26-1 to 26-M and the switches 27-1 to 27-M so that the outputs from the reception units 12-1 to 12-M are provided directly to the combining circuit 23 with bypassing the equalizers 21-1 to 21-M, and turns off the ON/OFF switch 28 to block the antenna reliability ratio output line from the combining weight generation circuit 22 to the combining circuit 23. Furthermore, the control unit 15 controls the switch 29 and the switch 30 so that the output from the combining circuit 23 is provided to the decode unit 14 via the equalizer 24, and turns on the ON/OFF switch 31 so that the reliability information is provided from the equalizer 24 to the decode unit 14. Thus, the combining circuit 23 generates a combined reception signal based on MMSE.

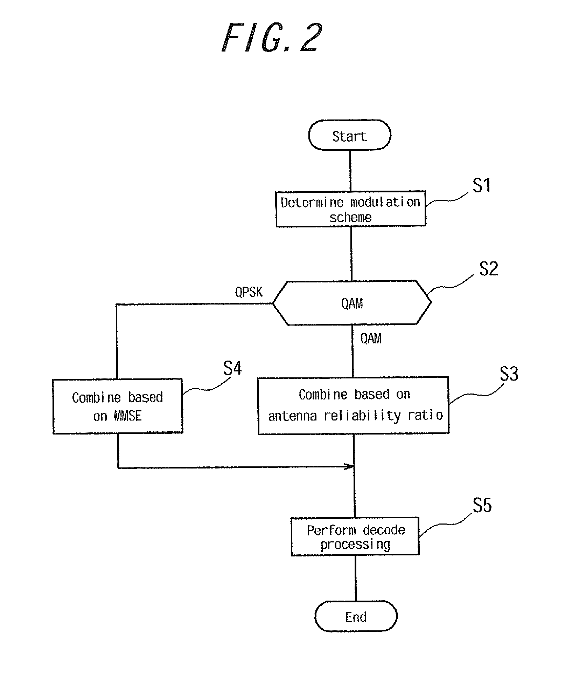

FIG. 2 is a schematic flowchart illustrating reception operation by the wireless communication apparatus according to the present embodiment. In the wireless communication apparatus, a built-in wireless protocol control unit which is not shown determines a currently-applied modulation scheme (Step S1) and provides the type information to the control unit 15. The control unit 15 judges whether or not the determined modulation scheme is QAM (Step S2), and controls the combining unit 13 so that a combined reception signal is generated based on the antenna reliability ratio when it is QAM (Step S3) or so that a combined reception signal is generated based on MMSE when it is QPSK (Step S4). Thereafter, the decode unit 14 performs decode processing on the combined reception signal generated at Step S3 or Step S4 to error-correct and decodes the combined reception signal (Step S5). The above processing is repeated each time the modulation scheme is determined by the wireless protocol control unit.

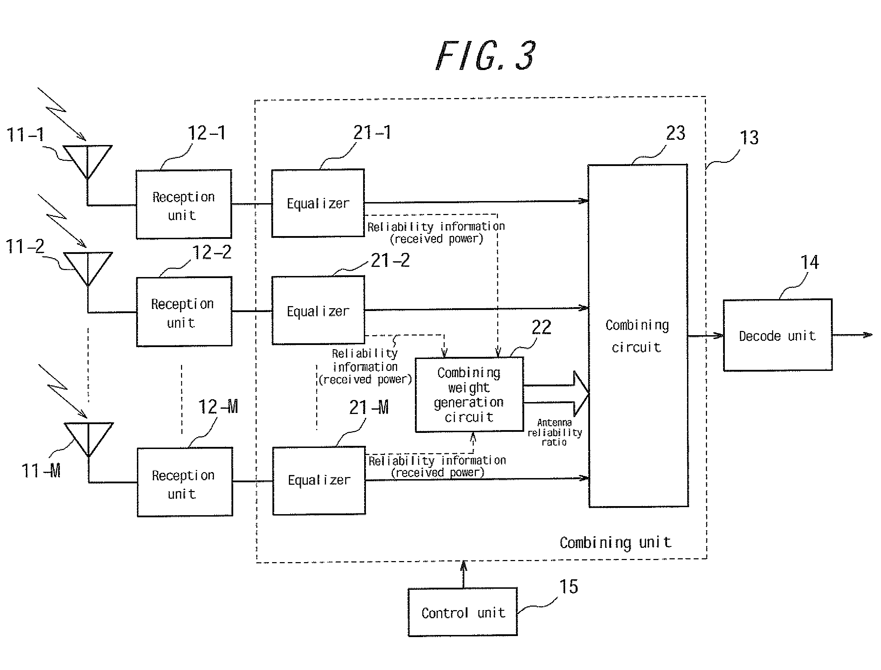

Next, there will be described the combining processing based on the antenna reliability ratio when the modulation scheme is QAM. In this case, the combining unit 13 is configured as shown in FIG. 3 by the control unit 15. Then, in the wireless communication apparatus, arrival signals received by the antennas 11-1 to 11-M are reception-processed and A/D-converted by the corresponding reception units 12-1 to 12-M, respectively, and output signals from such reception units 12-1 to 12-M are provided to the corresponding equalizers 21-1 to 21-M, respectively, in the combining unit 13.

Here, with respect to arrival signals received by the antennas 11-1 to 11-M, their amplitude and phase vary due to the influence of multipath environment in radio space. In the wireless communication apparatus according to the present embodiment, the outputs from the reception units 12-1 to 12-M are provided to the corresponding equalizers 21-1 to 21-M, respectively, and thereby channel estimation and equalization compensation compensating the variation of the amplitude and phase of arrival signals are conducted independently for each reception path using a known signal such as training sequence or pilot symbols inserted in the arrival signals so as to generate reliability information (received power) for each antenna and a reception signal after equalization compensation for each antenna.

The equalizers 21-1 to 21-M provide the generated reliability information of each antenna to the combining weight generation circuit 22 and provide the reception signal after equalization compensation to the combining circuit 23. The combining weight generation circuit 22 calculates the antenna combined amplitude based on the input reliability information of each antenna. Next, the combining weight generation circuit 22 calculates the antenna reliability ratio for each antenna based on the calculated antenna combined amplitude and the reliability information for each antenna, and provides the calculated antenna reliability ratio for each antenna as the combining weight ratio to the combining circuit 23.

The combining circuit 23 weights the reception signals after equalization compensation from the equalizers 21-1 to 21-M based on the antenna reliability ratios (combining weight ratios) of respective antennas from the combining weight generation circuit 22 and combines them to generate a combined reception signal. Next, the combining circuit 23 provides the combined reception signal to the decode unit 14 with bypassing the equalizer 24. The decode unit 14 error-corrects and decodes the combined reception signal provided from the combining circuit 23, and outputs the result.

The combining processing in the case of multilevel modulation will be described in more detail with an example in which wireless communication of a multicarrier modulation system is performed using the OFDM (Orthogonal Frequency Division Multiplexing) scheme as a communication method.

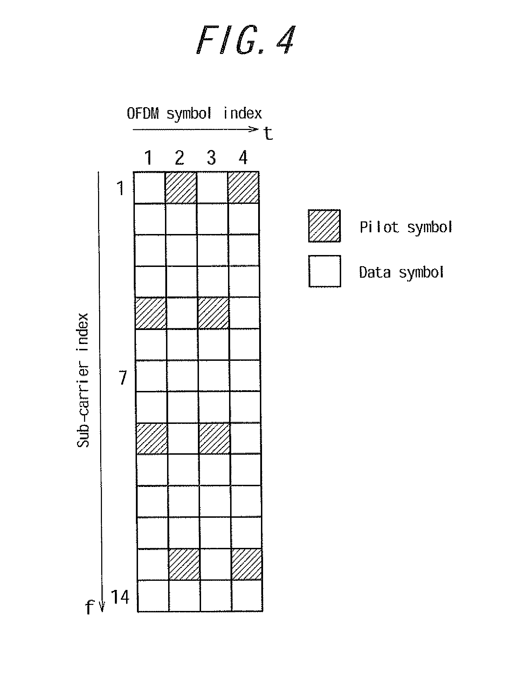

FIG. 4 is a diagram illustrating exemplifying a pilot arrangement in the OFDM scheme. This example shows a case in which, with respect to symbols of 14x4 having 14 symbols in a direction of frequency axis (f) (that is, 14 sub-carriers) and 4 symbols in a direction of time axis (t), pilots are assigned respectively in OFDM symbol index 2, 4 with sub-carrier index 1, 13 and OFDM symbol index 1, 3 with sub-carrier index 5, 9.

In the wireless communication apparatus according to the present embodiment, the channel characteristics of pilots are estimated first at the equalizers 21-1 to 21-M. Thereafter, the estimated channel characteristics are interpolated in data symbols in a direction of time axis, and the channel characteristics are interpolated in data symbols in a direction of frequency axis using the interpolated channel characteristics and channel characteristics of pilots in the direction of frequency axis.

Thus, the equalizers 21-1 to 21-M extract the pilots first and estimate (calculate) the transmission channel characteristics of the extracted pilots using the following expression (1).

$$H_{f,t}(a) = \frac{C_{f,t}(a)}{A_{f,t}(a)} \quad \cdots\cdots (1)$$

$$(0 < a < N_A)$$

f: sub-carrier index in which pilot is existent
t: OFDM symbol index in which pilot is existent
a: antenna index
$N_A$: the number of antennas

In the above expression (1), frequency response information $C_{f,t}(a)$ and $A_{f,t}(a)$ is calculated using the following expression (2).

$$\begin{cases} C_{f,t}(a) = x_{f,t}(a)r^*{}_{f,t} \\ A_{f,t}(a) = x_{f,t}(a)x^*{}_{f,t}(a) \end{cases} \quad \cdots\cdots (2)$$

$x_{f,t}$: complex input signal at (f, t) in antenna a.
$r_{f,t}$: reference signal at (f, t)
*: complex conjugate

After the channel characteristics of respective pilots are estimated as above, the equalizers 21-1 to 21-M performs, using sequential channel characteristics of pilots in a direction of time axis, linear interpolation on the channel characteristics of data symbols in a direction of time axis by the following expression (3).
$$Hd_{f,m}(a) = (1 - \frac{m}{N_T})H_{f,t-1}(a) + \frac{m}{N_T}H_{f,t}(a) \quad \cdots\cdots (3)$$

$$(t\text{-}1 < m < t)$$

$N_T$: OFDM symbol interval between adjacent pilots

Thereafter, the equalizers 21-1 to 21-M performs, using the channel characteristics of pilots estimated in a direction of time axis and the channel characteristics interpolated in data symbols, linear interpolation on the channel characteristics of data symbols in a direction of frequency axis by the following expression (4).
Frequency ascending linear interpolation

$$Hd_{n,t}(a) = (1 - \frac{n}{N_F})H_{f-1,t}(a) + \frac{n}{N_F}H_{f,t}(a) \quad \cdots\cdots (4)$$

$$(f\text{-}1 < n < f)$$

$N_F$: sub-carrier interval between adjacent pilots

After the channel characteristics of respective data symbols are estimated as above, the equalizers 21-1 to 21-M performs, using the estimated results, channel equalization on the reception signal of data symbols by the following expression (5), and provide the result to the combining circuit 23.
$$y_{f,t}(a) = x_{f,t}(a) \cdot H^*{}_{f,t}(a) \quad \cdots\cdots (5)$$

Moreover, the equalizers 21-1 to 21-M calculate received power as reliability information for each symbol of the corresponding antenna using the following expression (6), and provide the result to the combining weight generation circuit 22.
$$Env_{f,t}(a) = HI^2_{f,t}(a) + HQ^2_{f,t}(a) \quad \cdots\cdots (6)$$

$HI_{f,t}(a)$: I component of Channel characteristic at (f, t) of antenna a

$HQ_{f,t}(a)$: Q component of Channel characteristic at (f, t) of antenna a

The combining weight generation circuit 22 calculates an antenna combined amplitude based on reliability information (received power) of each antenna from the equalizers 21-1 to 21-M using the following expression (7). Based on the calculated antenna combined amplitude and amplitude of received power of each antenna, the combining weight generation circuit 22 calculates an antenna reliability ratio for each antenna as the combining weight ratio using the following expression (8), and thereafter provides the calculated antenna reliability ratio for each antenna to the combining circuit 23.
$$TotalAmp = \sum_{a=0}^{N_A} \sqrt{Env_{f,t}(a)} \quad \cdots\cdots (7)$$

$$RateEnv_{f,t}(a) = \frac{1}{TotalAmp \cdot \sqrt{Env_{f,t}(a)}} \quad \cdots\cdots (8)$$

The combining circuit 23 weights the reception signals after equalization compensation from the equalizers 21-1 to 21-M shown in the above expression (5) using the antenna reliability ratio of the corresponding antenna from the combining weight generation circuit 22 shown in the above expression (8) through the following expression (9), and diversity-combines them to generate a combined reception signal. Next, the combining circuit 23 provides the combined reception signal generated to the decode unit 14. The decode unit 14 error-corrects the combined reception signal provided from the combining circuit 23 and decodes it.
$$y_{f,t} = \sum_{a=0}^{N_A} x_{f,t}(a) \cdot H^*_{f,t}(a) \cdot RateEnv_{f,t}(a) \quad \cdots\cdots (9)$$

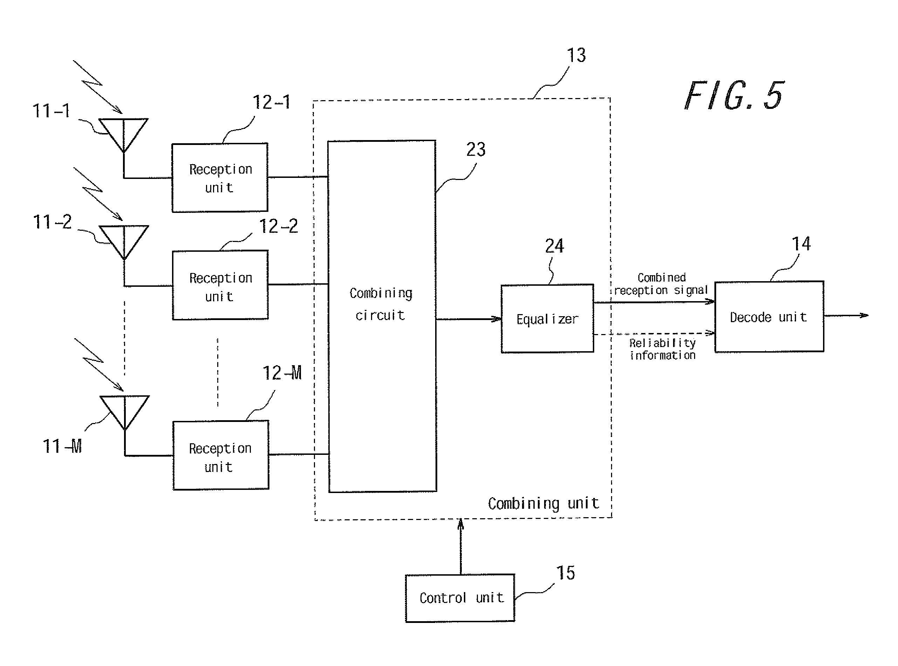

Next, there will be described the combining processing by MMSE when the modulation scheme is QPSK. In this case, the combining unit 13 is configured as shown in FIG. 5 by the control unit 15. In the wireless communication apparatus, in the same manner as the description for FIG.7, arrival signals received by the antennas 11-1 to 11-M are reception-processed and A/D-converted by the corresponding reception units 12-1 to 12-M. Output signals from the reception units 12-1 to 12-M are input to the combining circuit 23. The combining circuit 23 performs, on the signals input from the reception units 12-1 to 12-M, the first equalization correcting the phase using a known signal such as training sequence or pilot symbols inserted in the arrival signals, and diversity-combines them based on MMSE so that the combined received power is maximum to generate a combined reception signal.
Thereafter, the combining unit 13 performs with the equalizer 24 the second equalization on the combined reception signal based on the amplitude of known signal and provides it to the decode unit 14. The decode unit 14 performs error correction on the combined reception signal using reliability information (combined power), which is generated in the second equalization processing for the combined reception signal by the equalizer 24, and outputs a decode result.
In the present embodiment, therefore, the first combining unit is constituted with including the combining circuit 23 and the equalizer 24, and the second combining unit is constituted with including the equalizers 21-1 to 21-M, the combining weight generation circuit 22 and the combining circuit 23.

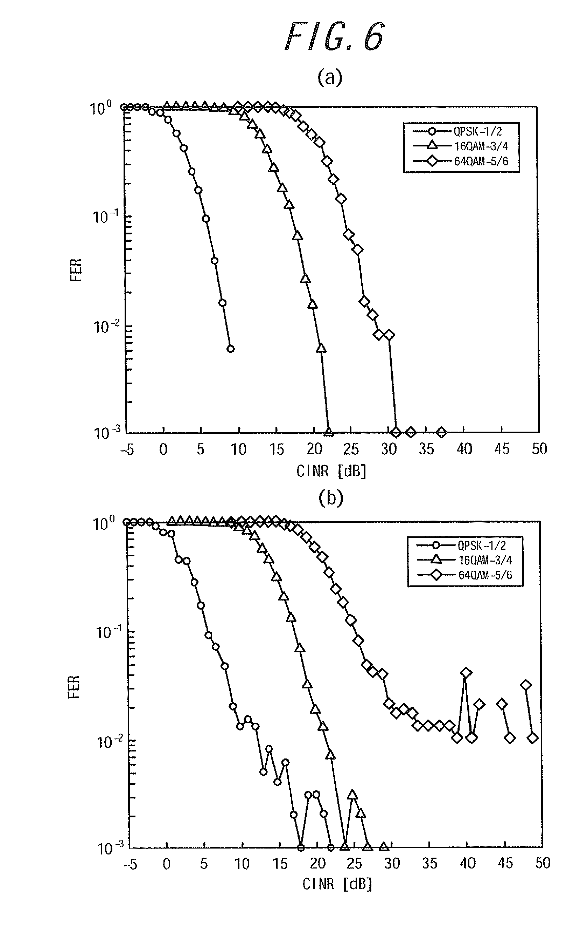

FIG. 6 illustrates a simulation result of frame error (FER) characteristics when the wireless communication apparatus according to the present embodiment generates a combined reception signal and performs decode processing thereon. FIG. 6(a) illustrates a simulation result when a combined reception signal is generated based on the antenna reliability ratio, and FIG. 6(b) illustrates a simulation result when a combined reception signal is generated based on MMSE. The simulation conditions are such that the number of reception antennas is two and Vehicular-A defined by ITU-R M. 1225 is used as a delay model. The delay time by this delay model is about 2.4 $\mu$sec. Moreover, the vehicular speed is 120 (km/h). The OFDM scheme is used as a communication scheme, and FER characteristics by modulation schemes of QPSK, 16QAM and 64QAM are simulated. The code rates of QPSK, 16QAM and 64QAM are set to be 1/2, 3/4 and 5/6, respectively.

As is clear from FIG. 6, when multilevel modulation by 16QAM/64QAM is performed, the deterioration of FER characteristics is significant and the FER value is not lowered even when the input CINR (Carrier to Interference plus Noise Ratio) value is increased in the case of MMSE shown in FIG. 6(b), so that the FER value of not more than $10^{-2}$, enabling the stable reception condition, cannot be obtained. In the case of antenna reliability ratio shown in FIG. 6(a), on the other hand, when the input CINR value is about 20dB for 16QAM and about 30dB for 64QAM, the FER value of not more than $10^{-2}$ can be respectively obtained, so that the stable reception condition can be maintained.

Moreover, with respect to the case of QPSK, the FER value can be lowered more when the input CINR value is increased in the case of MMSE shown in FIG. 6(b), as compared with the case of antenna reliability ratio shown in FIG. 6(a).

As above, in the wireless communication apparatus according to the present embodiment, when the modulation scheme is QAM, the combining weight generation circuit 22 calculates the antenna reliability ratio for each antenna as the combining weight ratio based on received power corresponding to each of a plurality of antennas 11-1 to 11-M, namely envelope information, and based on the calculated reliability ratio for each antenna, the combining circuit 23 weights corresponding signals received by the antennas 11-1 to 11-M and diversity-combines them. Thus, it is possible to reduce the influence of multipath fading caused by arrival waves with delays and maintain the stable reception condition even when the number of reception antennas is small.

Moreover, when the modulation scheme is QPSK, the signals received by the antennas 11-1 to 11-M are weighted and diversity-combined based on MMSE. Thereby, the noise removing effects by MMSE makes it possible to obtain a constant SNR value and maintain the stable reception condition. That is, although QPSK is applied when radio condition is poor and thus a high SNR value cannot be expected, it is required to secure the minimum signal quality and maintain a constant level of communication condition. In such a modulation scheme, the noise removing effects can be expected when MMSE is applied, and thus a constant SNR value can be obtained. According to the wireless communication apparatus of the present embodiment, therefore, it is possible, in performing wireless communication by employing adaptive modulation scheme, to reduce the influence of multipath fading caused by arrival waves with delays and maintain a constantly stable reception condition at a different modulation scheme even when the number of reception antennas is small.

It is noted that the present invention is not limited to the above embodiment, and many variations and modifications can be implemented. For example, in the case of QAM generating a combined reception signal based on the antenna reliability ratio in the above embodiment, the antenna combined amplitude calculated by the combining weight generation circuit 22 is used for judging the symbol position at the decode unit 14 to perform the decode processing. Thus, the fading durability of decode processing can be further improved. Moreover, in the case of QPSK generating a combined reception signal based on MMSE, the antenna combined amplitude is calculated and provided to the decode unit 14, for example, and thereby the decode unit 14 can correct the reliability from the equalizer 24 and then perform the decode processing. In this case also, the fading durability of decode processing can be further improved.

Furthermore, a first algorithm combining signals received by a plurality of antennas is not limited to MMSE, and other known algorithms can be applied. Similarly, a second algorithm is also not limited to the above method in which the antenna reliability ratio is calculated to combine the signals, and other known algorithms; the known MRC, for example, can be applied to combine them. Moreover, a modulation scheme in which the first algorithm is applied is not limited to QPSK, and it can be another phase shift modulation scheme such as BPSK or the like, a frequency shift modulation scheme or an amplitude shift modulation scheme. Similarly, a modulation scheme in which the second algorithm is applied is not limited to QAM, and it can be another known encoding modulation scheme. In addition, the present invention can be applied not only to a multicarrier modulation scheme such as OFDM scheme but also to wide range of wireless communication apparatuses diversity-combining signals received by a plurality of antennas.

**Claims**

1. A wireless communication apparatus having a plurality of antennas and for diversity-combining signals received by the plurality of antennas and performing communication with switching a modulation scheme according to a radio condition, comprising:

   a first combining unit for combining received power of the plurality of antennas based on a first algorithm;
   a second combining unit for combining received power of the plurality of antennas based on a second algorithm, which is different from the first algorithm; and
   a control unit for selecting either one of the first combining unit and the second combining unit depending on the modulation scheme and controlling a selected combining unit to combine received power of the plurality of antennas.

2. A wireless communication apparatus according to claim 1, wherein
the first combining unit employs a phase shift modulation scheme, and
the second combining unit employs a quadrature amplitude modulation scheme, wherein
the phase shift modulation scheme weights and combines signals received by the plurality of antennas using a minimum mean square error method, and
the quadrature amplitude modulation scheme calculates combining weight ratios based on received power of the plurality of antennas, and based on the calculated combining weight ratios, weights and combines the signals received by the plurality of antennas.

3. A wireless communication apparatus according to claim 2, wherein the combining weight ratio is calculated as an antenna reliability ratio for each antenna based on an antenna combined amplitude of received power of the plurality of antennas and amplitude of received power of each antenna, and signals received by respective antennas are weighted based on corresponding antenna reliability ratios, respectively, and combined.

4. A wireless communication apparatus according to claim 1, wherein signals received by the plurality of antennas to be combined by the first combining unit and the second combining unit are orthogonal frequency-division multiplexed reception signals.

5. A wireless communication apparatus according to claim 2, wherein signals received by the plurality of antennas to be combined by the first combining unit and the second combining unit are orthogonal frequency-division multiplexed reception signals.

6. A wireless communication apparatus according to claim 3, wherein signals received by the plurality of antennas to be combined by the first combining unit and the second combining unit are orthogonal frequency-division multiplexed reception signals.

7. A wireless reception method for diversity-combining signals received by a plurality of antennas, comprising:

combining received power of the plurality of antennas based on a first algorithm or a second algorithm depending on a modulation scheme, wherein the second algorithm is different from the first algorithm.

# FIG. 1

# FIG. 2

Start

Determine modulation scheme — S1

QPSK / QAM / QAM — S2

Combine based on MMSE — S4

Combine based on antenna reliability ratio — S3

Perform decode processing — S5

End

*FIG. 3*

## FIG. 4

FIG. 5

EP 2 187 536 A1

## FIG. 6

(a)

(b)

FIG. 7

EP 2 187 536 A1

## INTERNATIONAL SEARCH REPORT

| International application No. |
| --- |
| PCT/JP2008/065397 |

A. CLASSIFICATION OF SUBJECT MATTER
*H04B7/08*(2006.01)i

According to International Patent Classification (IPC) or to both national classification and IPC

B. FIELDS SEARCHED

Minimum documentation searched (classification system followed by classification symbols)
H04B7/08

Documentation searched other than minimum documentation to the extent that such documents are included in the fields searched
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>A | JP 2007-158515 A (Matsushita Electric Industrial Co., Ltd.), 21 June, 2007 (21.06.07), Par. Nos. [0096] to [0098]; Fig. 5 & US 2007-127609 A1 | 1,4,7<br>2,3,5,6 |
| A | JP 2005-006116 A (Matsushita Electric Industrial Co., Ltd.), 06 January, 2005 (06.01.05), Par. No. [0052]; Fig. 1 (Family: none) | 2,3 |
| A | JP 2006-140927 A (Sanyo Electric Co., Ltd.), 01 June, 2006 (01.06.06), Par. No. [0031]; Figs. 1, 4, 5 & US 2007-298826 A & WO 2006/051771 A1 | 1-7 |

☐ Further documents are listed in the continuation of Box C.  ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>17 October, 2008 (17.10.08) | Date of mailing of the international search report<br>28 October, 2008 (28.10.08) |
| --- | --- |
| Name and mailing address of the ISA/<br>Japanese Patent Office | Authorized officer |
| Facsimile No. | Telephone No. |

Form PCT/ISA/210 (second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007223182 A
- JP 2003501971 T
- WO 2004082182 A